# DEMANDE DE BREVET EUROPEEN

(11) **EP 2 374 646 A2**
(43) Date de publication de la demande: **12.10.2011**
(21) Numéro de dépôt: 11154302.1
(22) Date de dépôt: 14.02.2011
(51) Int. Cl.: B60K 1/04, B60R 16/00, B60S 5/06, H01M 2/10

(54) **Système de verrouillage pour rack batteries de véhicule électrique**

(30) Priorité: 06.04.2010 FR 1052583
(71) Demandeur: Akka Ingenierie Produit, 92300 Levallois-Perret (FR)
(72) Inventeur: Arnault, Philippe, 92290, Chatenay-Malabry (FR); Ricci, Maurice, 69002, LYON (FR)
(74) Mandataire: Gaillarde, Frédéric F. Ch.

(57) **Abrégé**

La présente invention se rapport à un système de verrouillage (5) d'un rack (2) amovible dans un logement, comprenant au moins un moyen de commande (6) associé à au moins un moyen de verrouillage (7) mobile entre une position d'engagement dans laquelle il coopère avec un moyen de verrouillage complémentaire (8), et une position de dégagement dans laquelle il est écarté du moyen de verrouillage complémentaire, le moyen de commande se présente sous la forme d'un vérin dont au moins une chambre (6b) est en communication fluide (9) avec une chambre (7b) d'un vérin correspondant du moyen de verrouillage de manière telle qu'une réduction du volume de la chambre du moyen de commande corresponde à une augmentation du volume de la chambre du vérin du moyen de verrouillage, et réciproquement ainsi qu'à un rack et un véhicule équipé d'un tel système.

## Description

La présente invention se rapporte à un système d'installation et de maintien en place d'un rack de batteries dans véhicule électrique correspondant.

Les véhicules électriques, ou hybrides, utilisent pour se propulser de l'énergie électrique stockée dans des batteries. Les batteries sont regroupées dans un rack installé dans le véhicule dans un logement prévu à cet effet et apte à recevoir ledit rack. Selon les modèles de véhicule, ce rack pourra être disposé dans un coffre arrière, ou encore intégré sous le plancher du véhicule, voire de manière amovible sous le véhicule.

Pour des raisons de maintenance, et notamment d'entretien et de remplacement des batteries, il est nécessaire de prévoir un système de rack amovible permettant une installation et un retrait simple et rapide du rack de batteries.

On connaît des systèmes d'installation et de dépose à vis nécessitant l'utilisation d'outils spécifiques tels que des visseuses / dévisseuses, ou encore des systèmes de crochets de verrouillage motorisés.

De tels systèmes présentent plusieurs inconvénients.

Tout d'abord, le recours à des outils spécifiques n'est généralement pas souhaité car est source d'allongement du temps de cycle et présente des risques de mauvaise manipulation des outils pouvant abîmer les vis ou autres composants.

L'utilisation de moyens de verrouillage électriques n'est pas non plus souhaitable car nécessite une alimentation électrique soit externe au véhicule, ce qui implique donc un branchement et des câbles, soit interne au véhicule ou au rack, ce qui nécessite donc une batterie annexe dédiée afin d'assurer l'entraînement desdits moteurs même lorsque le rack de batteries n'est pas encore en place ou retiré, ou encore les batteries déchargées.

Pas ailleurs, ces systèmes sont des systèmes particulièrement sensibles aux salissures risquant d'endommager le système de verrouillage, ces composants et moyens d'entraînements étant aisément accessibles à la poussière, boue, et autres salissures.

Il existe donc un besoin pour un système d'installation et verrouillage d'un rack de batteries dans un véhicule électrique ne nécessitant pas d'outils spécifiques, simple et rapide à opérer et ne présentant pas de soucis d'étanchéité vis-à-vis de l'extérieur.

Pour ce faire, la présente invention se rapporte à un système de verrouillage d'un rack amovible dans un logement, comprenant au moins un moyen de commande associé à au moins un moyen de verrouillage mobile entre une position d'engagement dans laquelle il coopère avec un moyen de verrouillage complémentaire et bloque le rack dans son logement, et une position de dégagement dans laquelle il est écarté du moyen de verrouillage complémentaire et libère le rack amovible, caractérisé en ce que le moyen de commande se présente sous la forme d'un vérin dont au moins une chambre est en communication fluide avec une chambre d'un vérin correspondant du moyen de verrouillage de manière telle qu'une réduction du volume de la chambre du moyen de commande corresponde à une augmentation du volume de la chambre du vérin du moyen de verrouillage, et réciproquement.

Ainsi, en prévoyant des moyens de verrouillage actionnés sous l'effet de la transmission de la pression d'un fluide, on obtient un système fiable et aisément déverrouillable sans nécessiter d'outils spécifique. En effet, il suffit de faire varier le volume de la chambre du moyen de commande pour que le fluide se déplace vers ou depuis le moyen de verrouillage correspondant et provoque son activation en vue du verrouillage ou déverrouillage.

Par ailleurs, ce système est étanche vis-à-vis de l'extérieur, le fluide circulant à travers un circuit étanche dédié, et son fonctionnement n'est donc pas particulièrement sensible à un engorgement par des salissures.

De manière préférentielle, l'exercice d'une pression sur le moyen de commande entraîne la rétractation des moyens de verrouillage en position de dégagement. Ainsi, le système est sécurisé, et le déverrouillage du rack nécessite de maintenir la pression sur le moyen de commande.

Avantageusement, le moyen de commande est un vérin simple effet. En effet, seule une chambre de fluide est nécessaire. Le circuit de fluide est ainsi simplifié.

Avantageusement, le vérin du moyen de verrouillage est également un vérin simple effet.

De manière préférentielle, le vérin simple effet du moyen de verrouillage tend à ramener le vérin vers une position d'engagement du moyen de verrouillage.

Préférentiellement, qu'un moyen de commande est associé à une pluralité de moyens de verrouillage, notamment deux, par exemple.

Selon une première variante de réalisation, le moyen de verrouillage est un doigt vertical à billes.

Selon une deuxième variante de réalisation, ou de manière complémentaire, le moyen de verrouillage est une gâche horizontale.

Selon une troisième variante de réalisation, ou de manière complémentaire, le moyen de verrouillage est un doigt vertical à gâches horizontales.

Selon une quatrième variante de réalisation, ou de manière complémentaire, le moyen de verrouillage est un doigt vertical à griffes.

De manière préférentielle, le moyen de verrouillage est équipé de moyens de déverrouillage manuel. Ainsi, en cas de défaillance pneumatique ou hydraulique, il sera toujours possible de déverrouiller le rack.

La présente invention se rapporte également à un véhicule comprenant au moins un logement destiné à recevoir un rack amovible, caractérisé en ce qu'il est équipé d'au moins un système selon l'invention apte à permettre le verrouillage et déverrouillage du rack dans son logement en vue de son installation ou extraction, les moyens de verrouillage complémentaires appartenant au rack.

Avantageusement, le logement du rack est situé en dessous du véhicule.

Avantageusement encore, le moyen de commande est situé au niveau d'un point de levage du véhicule. Ainsi, lors d'opérations de maintenance du véhicule, son installation sur un pont de levage permettra également de prévoir un déverrouillage et extraction concomitante du rack.

Selon un mode de réalisation préféré, le rack est un rack batterie pour véhicule électrique.

La présente invention se rapporte également à un rack, notamment pour batterie, destiné à être installé de manière amovible dans un logement correspondant d'un véhicule, caractérisé en ce que ledit rack est équipé d'au moins un système selon l'invention, les moyens de verrouillage complémentaires appartenant à une structure fixe du véhicule.

La présente invention sera mieux comprise à la lumière de la description détaillée qui suit en regard du dessin annexé dans lequel :
- La figure 1 est une représentation schématique vue de dessous d'un véhicule électrique comprenant un rack batterie disposé dans un logement correspondant du véhicule.
- Les figures 2 et 3 sont des représentations schématiques de principe d'un système de verrouillage selon l'invention équipant le rack batterie et le véhicule de la figure 1.
- La figure 4 est une autre représentation de principe du système de verrouillage selon l'invention.
- Les figures 5 et 6 sont des représentations d'alternatives de réalisation d'un système de verrouillage selon l'invention, le système de verrouillage étant situé respectivement sur une caisse du véhicule de la figure 1 et sur le rack batterie lui-même.
- Les figures 7 à 10 sont des représentations schématiques en coupe longitudinale d'exemples de réalisation des moyens de verrouillage du système.
- Les figures 11 et 12 sont des représentations schématiques en coupe longitudinale d'un exemple de réalisation d'un moyen de commande du système de verrouillage.

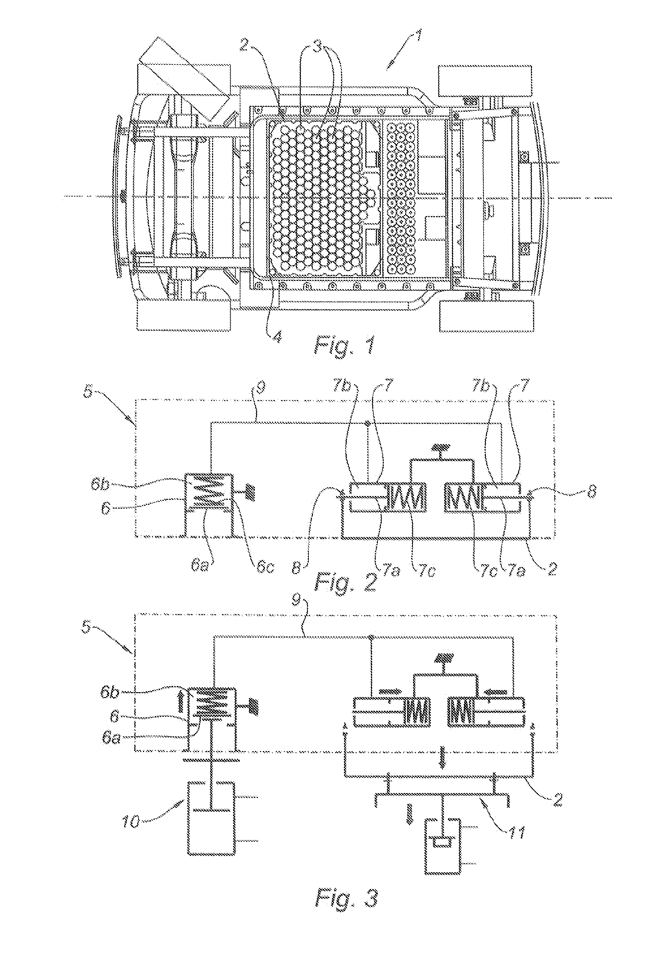

La figure 1 montre un véhicule électrique 1 utilisant pour se propulser de l'énergie électrique stockée dans un ensemble de batteries 2. Ces batteries 2 sont regroupées dans un rack 3 installé dans un logement 4 ménagé dans la caisse du véhicule et plus précisément sous le plancher de caisse de ce dernier.

Afin de pouvoir procéder à des opérations de maintenance et notamment de remplacement du rack 2, celui-ci est installé dans son logement 4 de manière amovible.

Pour ce faire, la présente invention prévoit un système de verrouillage / déverrouillage 5 dudit rack 2 dans son logement 4 du véhicule 1.

Le principe de fonctionnement de ce système de verrouillage 5 est représenté de manière schématique aux figures 2 et 3.

Le système de verrouillage 5 comprend, d'une part, un moyen de commande 6, et d'autre part, un ensemble de moyens de verrouillage 7, représentés schématiquement sous la forme de doigts de verrouillage, aptes à coopérer avec des moyens de verrouillage complémentaires 8 correspondant, en l'espèce, des oeillets recevant les doigts de verrouillage.

Sur le schéma de principe représenté, les moyens de verrouillage complémentaires 8 appartiennent au rack 2 tandis que le moyen de commande 6 et les moyens de verrouillage 7 appartiennent à une structure fixe (caisse) du véhicule 1.

Afin de pouvoir déverrouiller le rack 2, les moyens de verrouillage 7 sont mobiles entre une position d'engagement (figure 2) dans laquelle ils coopèrent avec les moyens de verrouillage complémentaires 8 correspondants de manière à bloquer le rack 2 en position installée, et une position de dégagement (figure 3) dans laquelle ils sont écartés des moyens de verrouillage complémentaires 8 et libèrent le rack 2 amovible.

Conformément à l'invention, le moyen de commande 6 se présente sous la forme d'un vérin simple effet comprenant un piston 6a apte à faire varier le volume d'une chambre 6b contenant un fluide, ledit piston étant par ailleurs monté à l'encontre d'un moyen de retour élastique (ressort 6c) tendant à forcer le piston 6a dans une position où le volume de la chambre 6c est maximal.

De manière similaire, les moyens de verrouillage 7 sont réalisés sous la forme de vérins formant doigts de verrouillage comprenant un piston 7a apte à faire varier le volume d'une chambre 7b contenant un fluide, ledit piston 7a étant monté à l'encontre d'un moyen de retour élastique 7c tendant à le forcer dans une position où le volume de la chambre 7b est minimal.

Toujours conformément à l'invention, la chambre 6b du moyen de commande 6 est en communication fluide avec les chambres 7b des moyens de verrouillage 7 par le biais d'un circuit 9 de communication étanche.

La figure 2 montre la situation où le rack 2 est verrouillé en position dans son logement 4.

Dans cette situation, le volume de la chambre 6b du moyen de commande 6 est maximal et le volume des chambre 7b des moyens de verrouillage 7 est minimal, les moyens de verrouillage 7 étant engagés avec leurs moyens de verrouillage complémentaires 8 de manière à bloquer le rack 2.

La figure 3 montre le déverrouillage du rack 2 en vue de l'extraire de son logement 4.

Pour ce faire, un organe 10, par exemple de type vérin hydraulique, vient exercer sur le piston 6a du moyen de commande 6, une pression venant diminuer le volume de la chambre 6b et comprimer le ressort 6c.

Ce faisant, le fluide contenu dans la chambre 6b est forcé hors de la chambre à travers le circuit 9 vers les chambres 7b des moyens de verrouillage 7.

La pression du fluide dans les chambres 7b augmente alors jusqu'à forcer les pistons 7a en retrait contre leur moyen de retour élastique 7c respectif de manière à permettre l'augmentation du volume de la chambre 7b pour recevoir le fluide.

Le retrait du piston 7a provoque la rétractation des doigts de verrouillage hors des moyens de verrouillage complémentaires 8 désengageant de ce fait le rack 2.

Le rack 2 peut ainsi être simplement extrait de son logement par gravité et descente d'une table de dépose 11 qu'on aura pris soin de disposer sous le rack 2 avant déverrouillage.

L'homme du métier est à même de calculer les volumes de chambre 6b, 7b nécessaire ainsi que les forces de rappels des ressorts 6c, 7c ainsi que la pression du fluide dans l'ensemble.

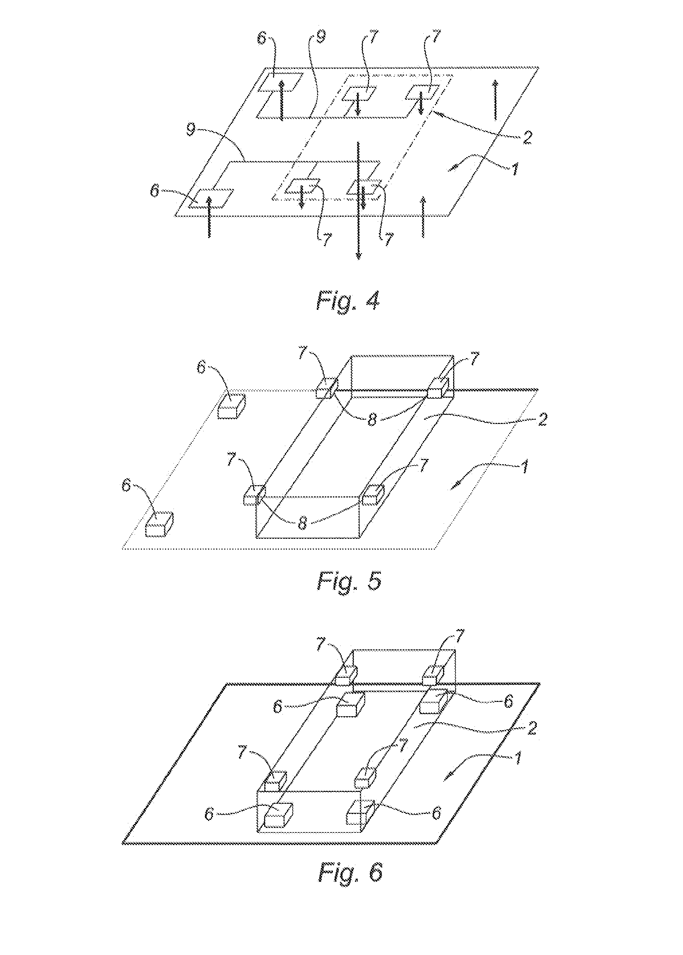

Avantageusement, comme représenté schématiquement sur la figure 4, le rack 2 sera verrouillé à l'aide de quatre moyens de verrouillage 7 commandés par paire par deux moyens de commande 6, un circuit 9 reliant chaque moyen de commande 6 à ses deux moyens de verrouillage 7 associés.

Les figures 5 et 6 montrent schématiquement deux modes de réalisation différents.

Dans un premier mode de réalisation (figure 5), les moyens de verrouillage 7 et les moyens de commande 6 sont situés sur une structure fixe du véhicule 1, le rack 2 portant les moyens de verrouillage complémentaires 8.

Dans un deuxième mode de réalisation (figure 6), les moyens de verrouillage 7 et les moyens de commande 6 sont situés sur le rack 2, la structure fixe du véhicule portant les moyens de verrouillage complémentaires 8.

On notera que sur la figure 6, on a prévu quatre moyens de commande 6, chacun actionnant un moyen de verrouillage 7 associé.

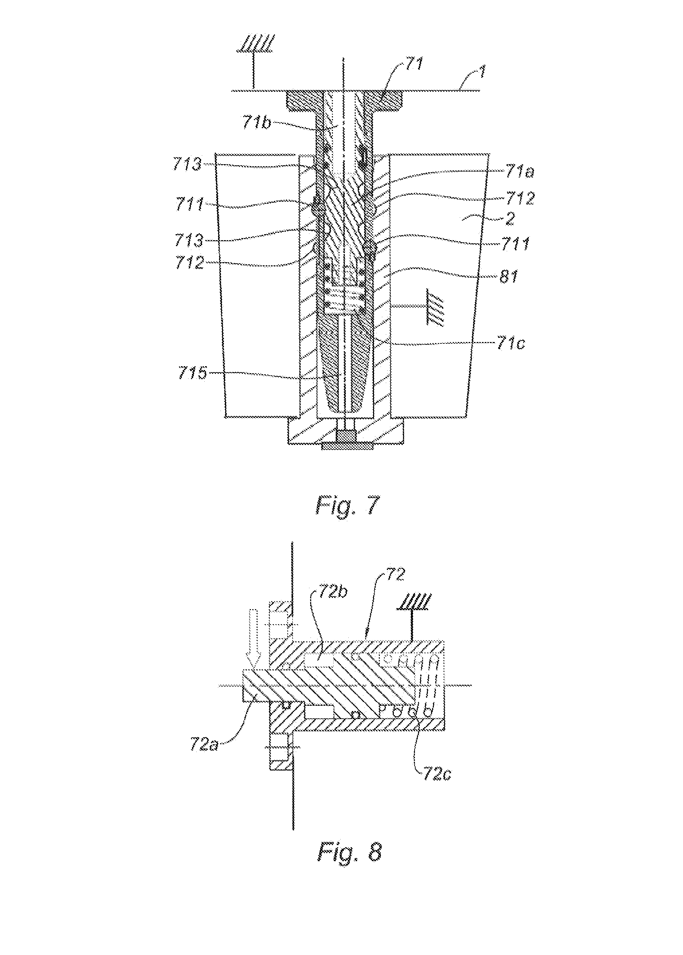

Les figures 7 à 10 montrent des exemples de moyens de verrouillage 7.
La figure 7 montre un premier exemple 71 de moyen de verrouillage 7 se présentant sous la forme d'un doigt vertical à billes apte à coopérer avec un moyen de verrouillage complémentaire 81 se présentant sous la forme d'orifices verticaux correspondant.

Sur l'exemple représenté, le doigt vertical à billes 71 appartient au véhicule 1 tandis que le moyen de verrouillage complémentaire 81 appartient au rack 2. Bien évidemment, comme expliqué précédemment, la configuration inverse est possible.

Le doigt vertical à billes 71 présente d'une pluralité de billes de blocage 711 serties à sa périphérie et aptes à coopérer avec des gorges périphériques 712 correspondantes du moyen de verrouillage complémentaire 81 pour verrouiller le doigt vertical à billes 71 dans le moyen de blocage complémentaire 81.

Conformément à l'invention, le doigt vertical à bille 71 abrite un vérin comprenant une tige 71 a dont la périphérie présente des gorges 713 complémentaires des billes 711 mais décalées par rapport à ces dernières selon l'axe longitudinal de la tige 71a.

La tige 71a permet également de faire varier le volume d'une chambre 71b recevant un fluide et est montée à l'encontre d'un ressort 71c la forçant vers une position où le volume de la chambre 71b est minimal.

Ainsi, en l'absence de pression exercée par le fluide, les gorges 713 ne sont pas en regard des billes 711 et ces dernières sont maintenues dans les gorges 712 par le reste de la tige du piston 71a. Lorsque le fluide arrive dans la chambre 71b et repousse le piston 71a contre son ressort 71c en vue d'augmenter le volume disponible de la chambre 71b, les gorges 713 sont amenées en regard des billes 711 qui peuvent alors sortir des gorges 712 et libérer le doigt de verrouillage 71.

On notera également que le doigt de verrouillage 71 présente un canal terminal traversant 715 destiné à permettre l'introduction d'un outil en vue d'un déverrouillage manuel si nécessaire.

La figure 8 montre un deuxième exemple 72 de moyen de verrouillage 7 se présentant sous la forme d'un doigt de verrouillage horizontal apte à coopérer avec un moyen de verrouillage complémentaire (non représenté) se présentant sous la forme d'un oeillet correspondant.

Sur l'exemple représenté, le doigt de verrouillage horizontal 72 appartient au rack 2 tandis que le moyen de verrouillage complémentaire appartient au véhicule 1. Bien évidemment, comme expliqué précédemment, la configuration inverse est possible.

Le doigt de verrouillage horizontal 72 présente sous la forme d'un vérin comprenant un piston 72a dont la tige constitue le doigt de verrouillage horizontal.

Le piston 72a permet de faire varier le volume d'une chambre 72b recevant un fluide et est monté à l'encontre d'un ressort 72c la forçant vers une position où le volume de la chambre 72b est minimal.

Ainsi, en l'absence de pression exercée par le fluide, la tige du piston 72a est forcée par le ressort 72c à l'intérieur du moyen de verrouillage complémentaire et retient le poids du rack 2 (flèche). Lorsque le fluide arrive dans la chambre 72b et repousse le piston 72a contre son ressort 72c en vue d'augmenter le volume disponible de la chambre 72b, la tige du piston 72a est rétractée en dehors du moyen de verrouillage complémentaire et libère le rack 2.

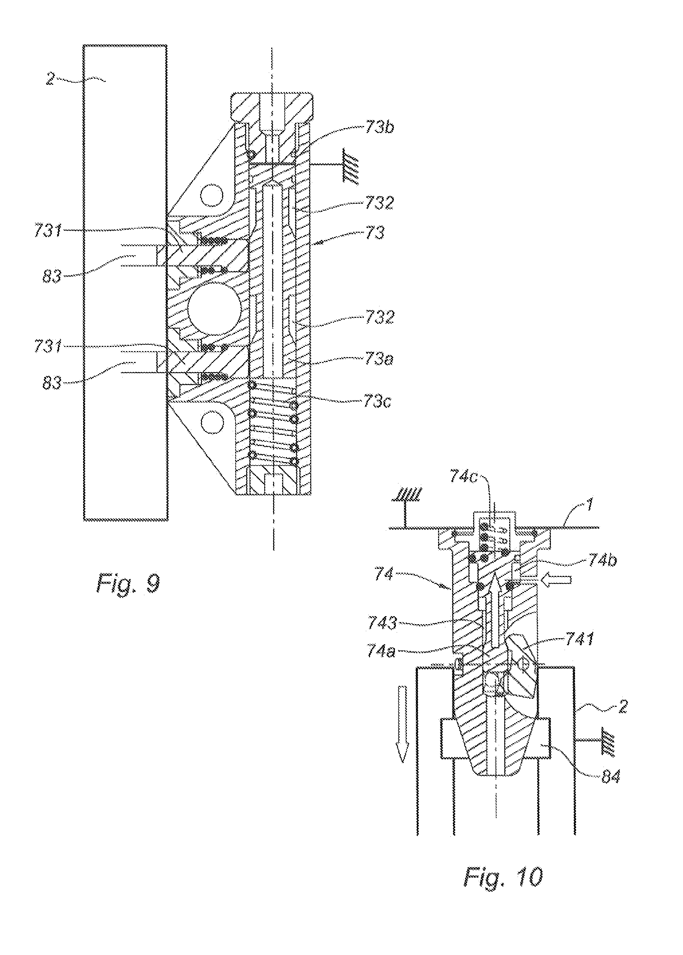

La figure 9 montre un troisième exemple 73 de moyen de verrouillage 7 se présentant sous la forme d'un moyen de verrouillage vertical à gâches 731 horizontales, les gâches 731 étant aptes à coopérer avec un moyen de verrouillage complémentaire 83 se présentant sous la forme d'orifices horizontaux correspondant.

Sur l'exemple représenté, le moyen de verrouillage 73 appartient au véhicule 1 tandis que le moyen de verrouillage complémentaire 83 appartient au rack 2. Bien évidemment, comme expliqué précédemment, la configuration inverse est possible.

Les gâches 731 sont mobiles entre une position d'engagement dans laquelle elles pénètrent dans les orifices 83 pour bloquer le rack et une position de déverrouillage dans laquelle elles ressortent des orifices 83 et libèrent le rack 2.

Les gâches 731 sont maintenues en position d'engagement par une tige 73a montée mobile et présentant également des gorges périphériques 732 correspondantes autorisant le retrait des gâches 731 lorsqu'elles sont amenées en regard desdites gâches 731.

Plus précisément la tige 73a est un élément constitutif d'un vérin dont elle forme le piston.

Conformément à l'invention, ce piston 73a permet de faire varier le volume d'une chambre 73b recevant un fluide et est montée à l'encontre d'un ressort 73c la forçant vers une position où le volume de la chambre 73b est minimal.

Ainsi, en l'absence de pression exercée par le fluide, les gorges 732 ne sont pas en regard des gâches 731 et ces dernières sont maintenues dans les orifices 83 correspondants du rack 2. Lorsque le fluide arrive dans la chambre 73b et repousse le piston 73a contre son ressort 73c en vue d'augmenter le volume disponible de la chambre 73b, les gorges 732 sont amenées en regard des gâches 731 qui peuvent alors sortir des orifices 83 et libérer le rack 2.

On notera également que le moyen de verrouillage 73 pourra présenter des moyens de déverrouillage manuel.

Le moyen de verrouillage 73 présente deux gâches 731. Bien évidemment, le même système de verrouillage peut fonctionner avec un nombre différent de gâches 731.

La figure 10 montre un quatrième exemple 74 de moyen de verrouillage 7 se présentant sous la forme d'un moyen de verrouillage vertical à crochet 741 apte à pivoter pour venir en prise avec un moyen de verrouillage complémentaire 84 se présentant sous la forme d'un logement correspondant.

Sur l'exemple représenté, le moyen de verrouillage 74 appartient au véhicule 1 tandis que le moyen de verrouillage complémentaire 84 appartient au rack 2. Bien évidemment, comme expliqué précédemment, la configuration inverse est possible.

Les crochets 741 sont mobiles entre une position d'engagement dans laquelle ils viennent en prise avec le moyen de verrouillage complémentaire 84 pour retenir le rack 2 et une position de déverrouillage dans laquelle ils ressortent du moyen de verrouillage complémentaire et libèrent le rack 2.

Les crochets 741 sont maintenus en position d'engagement par une tige 74a montée mobile et présentant également un creux périphérique 743 autorisant le retrait des crochets 741 lorsqu'il est amené en regard desdits crochets 743.

Plus précisément la tige 74a est un élément constitutif d'un vérin dont elle forme le piston.

Conformément à l'invention, ce piston 74a permet de faire varier le volume d'une chambre 74b recevant un fluide et est montée à l'encontre d'un ressort 74c la forçant vers une position où le volume de la chambre 74b est minimal.

Ainsi, en l'absence de pression exercée par le fluide, le creux 743 n'est pas en regard des crochets 741 et ces derniers sont maintenus en prise avec le moyen de verrouillage complémentaire 84 correspondant du rack 2. Lorsque le fluide arrive dans la chambre 74b et repousse le piston 74a contre son ressort 74c en vue d'augmenter le volume disponible de la chambre 74b, le creux 743 est amené en regard des crochets 741 et autorise leur retrait et désengagement du moyen de verrouillage complémentaire 84 ce qui libére le rack 2.

On notera également que le moyen de verrouillage 74 pourra présenter des moyens de déverrouillage manuel.

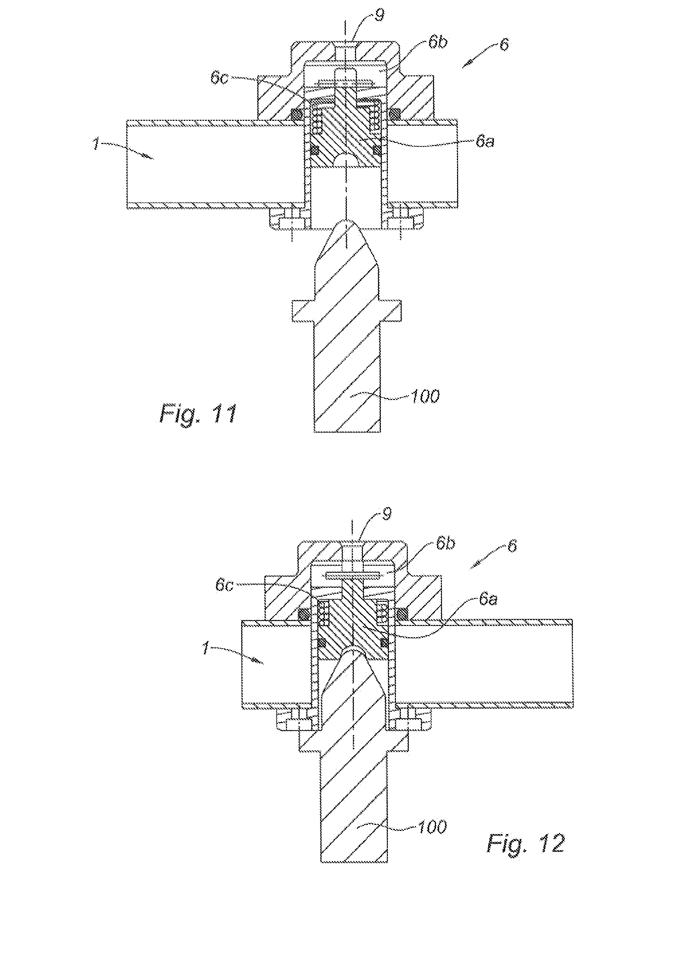

Les figures 11 et 12 montrent un exemple de réalisation du moyen de commande 6.

En l'espèce, le moyen de commande 6 est fixé dans une structure fixe du véhicule.

Conformément à l'invention, le moyen de commande 6 se présente sou la forme d'un vérin comprenant un piston 6a apte à faire varier le volume d'une chambre 6b contenant un fluide et est monté à l'encontre d'un ressort 6c tendant à le repousser dans une position où le volume de la chambre 6b est maximal.

La chambre 6b est en communication fluide avec le circuit 9 de manière à pouvoir distribuer le fluide aux moyens de verrouillage 7 associés.

En position de verrouillage (figure 11), le piston 6a est en position telle que le volume de la chambre 6b est maximal. Le fluide n'est soumis à aucune pression et peut être contenu dans la chambre 6b. Au niveau des moyens de verrouillage 7 associés, on rappelle que leur chambre 7b a un volume minimal.

Pour déverrouiller le système, on vient, à l'aide d'un doigt 100, par exemple, exercer sur le piston 6a, une pression le forçant contre le ressort 7c de manière à réduire le volume de la chambre 6b.

Ce faisant, le fluide ne peut plus être contenu dans la chambre 6b et en est ejecté à travers le circuit 9 vers les chambres 7b correspondantes des moyens de verrouillage 7 où sa pression entraîne l'augmentation du volume desdites chambres 7b par déplacement des pistons 7a à l'encontre de leur ressort 7c, ce qui entraîne le déverrouillage des moyens de verrouillage 7 comme expliqué précédemment.

Les ressorts 6c, 7c permettent un retour automatique en position de verrouillage lorsque le doigt 100 est relâché.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de verrouillage (5) d'un rack (2) amovible dans un logement (4), comprenant au moins un moyen de commande (6) associé à au moins un moyen de verrouillage (7) mobile entre une position d'engagement dans laquelle il coopère avec un moyen de verrouillage complémentaire (8) et bloque le rack dans son logement, et une position de dégagement dans laquelle il est écarté du moyen de verrouillage complémentaire et libère le rack amovible, **caractérisé en ce que** le moyen de commande se présente sous la forme d'un vérin dont au moins une chambre (6b) est en communication fluide avec une chambre (7b) d'un vérin correspondant du moyen de verrouillage de manière telle qu'une réduction du volume de la chambre du moyen de commande corresponde à une augmentation du volume de la chambre du vérin du moyen de verrouillage, et réciproquement.

2. Système de verrouillage (5) selon la revendication 1, **caractérisé en ce que** l'exercice d'une pression sur le moyen de commande (6) entraîne la rétractation des moyens de verrouillage (7) en position de dégagement.

3. Système de verrouillage (5) selon l'une quelconque des revendications 1 ou 2, **caractérisé en ce que** le moyen de commande (6) est un vérin simple effet.

4. Système de verrouillage (5) selon l'une quelconque des revendications 1 à 3, **caractérisé en ce que** le vérin du moyen de verrouillage (7) est un vérin simple effet.

5. Système de verrouillage (5) selon la revendication 4, **caractérisé en ce que** le vérin simple effet du moyen de verrouillage (7) tend à ramener le vérin vers une position d'engagement du moyen de verrouillage.

6. Système de verrouillage (5) selon l'une quelconque des revendications 1 à 5, **caractérisé en ce qu'**un moyen de commande (6) est associé à une pluralité de moyens de verrouillage (7), notamment deux, par exemple.

7. Système de verrouillage (5) selon l'une quelconque des revendications 1 à 6, **caractérisé en ce que** le moyen de verrouillage (7) est un doigt vertical à billes (71).

8. Système de verrouillage (5) selon l'une quelconque des revendications 1 à 6, **caractérisé en ce que** le moyen de verrouillage (7) est une gâche horizontale (72).

9. Système de verrouillage (5) selon l'une quelconque des revendications 1 à 6, **caractérisé en ce que** le moyen de verrouillage (7) est un doigt vertical à gâches horizontales (73).

10. Système de verrouillage (5) selon l'une quelconque des revendications 1 à 6, **caractérisé en ce que** le moyen de verrouillage (7) est un doigt vertical à griffes (74).

11. Système de verrouillage (5) selon l'une quelconque des revendications 1 à 10, **caractérisé en ce que** le moyen de verrouillage (7) est équipé de moyens de déverrouillage manuel.

12. Véhicule (1) comprenant au moins un logement (4) destiné à recevoir un rack (2) amovible, **caractérisé en ce qu'**il est équipé d'au moins un système (5) selon l'une quelconque des revendications 1 à 11 apte à permettre le verrouillage et déverrouillage du rack dans son logement en vue de son installation ou extraction, les moyens de verrouillage complémentaires (8) appartenant au rack.

13. Véhicule (1) selon la revendication 12, **caractérisé en ce que** le logement (4) du rack (2) est située en dessous du véhicule.

14. Véhicule (1) selon l'une quelconque des revendications 12 ou 13, **caractérisé en ce que** le moyen de commande (6) est situé au niveau d'un point de levage du véhicule.

15. Véhicule (1) selon l'une quelconque des revendications 12 à 14, **caractérisé en ce que** le rack (2) est un rack batterie pour véhicule électrique.

16. Rack (2), notamment pour batteries, destiné à être installé de manière amovible dans un logement (4) correspondant d'un véhicule (1), **caractérisé en ce que** ledit rack est équipé d'au moins un système (5) selon l'une quelconque des revendications 1 à 11, les moyens de verrouillage complémentaires (8) appartenant à une structure fixe du véhicule.
